# EUROPEAN PATENT SPECIFICATION

(11) **EP 3 989 389 B1**
(45) Date of publication and mention of the grant of the patent: **24.06.2026**
(21) Application number: 21203189.2
(22) Date of filing: 18.10.2021
(51) Int. Cl.: H02J 7/02

(54) **CHARGING PILE AND CHARGING UNIT THEREOF**
LADESÄULE UND LADEEINHEIT DAFÜR
PILE DE CHARGE ET SON UNITÉ DE CHARGE

(30) Priority: 21.10.2020 CN 202011130618
(43) Date of publication of application: 27.04.2022
(73) Proprietor: Sungrow Power Supply Co., Ltd., Hefei, Anhui 230088 (CN)
(72) Inventor: ZHAO, Wei, Hefei 230088 (CN); YANG, Yuefeng, Hefei 230088 (CN); XU, Linchong, Hefei 230088 (CN)
(74) Representative: Rooney, John-Paul

(56) References cited:
- CN-A- 108 767 953
- CN-U- 204 131 220
- CN-U- 207 339 303
- CN-U- 208 226 654
- CN-U- 208 401 605

## Description

### FIELD

The present disclosure relates to the technical field of charging pile, and in particular to a charging pile and a charging unit thereof.

### BACKGROUND

In a conventional direct current DC charging pile, a power conversion portion is generally designed as a discrete power conversion module that is, for example, used as a black box. Different numbers of power conversion modules are connected in parallel to obtain different power levels. Since each of the modules has a power factor correction (PFC) converter and an isolated DC/DC converter, an increased number of the modules may lead to redundancy in hardware design and thereby causes a large cost, a high weight and a great volume of the DC charging pile. In addition, a large number of power conversion modules connected in parallel leads to a high possible of failures of the DC charging pile, which results in low reliability of the DC charging pile. Patent publication CN 108 767 953 A to HENAN SENYUAN ELECTRIC CO LTD discloses in paragraph [0017] that a power assigning unit adjusts an output power according to a control instruction, and outputs the required power to a terminal (such as a charging gun). The appended claims are characterised over this document. Utility model publications CN 208 401 605 U, CN 207 339 303 U, and CN 204 131 220 U are all thought to be relevant.

### SUMMARY

In view of the above, an objective of the present disclosure is to provide a charging pile and a charging unit thereof, which can improve utilization of components in the charging unit of the charging pile and reduce cost and volume of the charging pile.

According to a first aspect of the present disclosure, a charging unit of a charging pile is provided, including an alternating current AC distribution unit, a power assigning unit, and at least one power conversion unit. The power conversion unit includes one rectifier module and n direct current DC/DC converters, where n is an integer greater than 1. An input terminal of the AC distribution unit serves as an input terminal of the charging unit for receiving AC power. An output terminal of the AC distribution unit is connected to an AC side of the rectifier module in the power conversion unit. A DC side of the rectifier module of the power conversion unit is connected to input terminals of the n DC/DC converters. Output terminals of the n DC/DC converters of the power conversion unit are connected to multiple input terminals of the power assigning unit. Each output terminal of the power assigning unit serves as an output terminal of the charging unit for charging an electric device. Wherein the charging unit is characterized in that the power assigning unit (3) comprises a multiplex switch configured to control power inputs to the power assigning unit (3) to be outputted individually or in a serial and/or parallel manner

In an embodiment, the AC distribution unit includes a switch unit. a phase A input of the AC power is connected to a phase A sub-terminal of an input terminal of the switch unit, a phase B input of the AC power is connected to a phase B sub-terminal of the input terminal of the switch unit, a phase C input of the AC power is connected to a phase C sub-terminal of the input terminal of the switch unit. An output terminal of the switch unit serves as the output terminal of the AC distribution unit.

In an embodiment, the switch unit includes a drive circuit and an AC relay group. An input terminal of the AC relay group is connected to the input terminal of the switch unit. An output terminal of the AC relay group is connected to the output terminal of the switch unit. The AC relay group is controlled by the drive circuit.

In an embodiment, the AC relay group includes a switch subunit provided on each cable for a phase in the AC relay group.

In an embodiment, each switch subunit includes at least one relay.

In an embodiment, each switch subunit includes two relays connected in series.

In an embodiment, each switch subunit includes a circuit breaker provided between the input terminal of the switch unit and the input terminal of the AC relay group.

In an embodiment, the AC distribution unit further includes a lightning arrester. The phase A input, phase B input, and phase C input of the AC power are grounded through the lightning arrester.

In an embodiment, the rectifier module includes an electromagnetic compatibility EMC circuit and an AC/DC converter. An input terminal of the EMC circuit serves as an AC side of the rectifier module. An output terminal of the EMC circuit is connected to an AC side of the AC/DC converter. A DC side of the AC/DC converter serves as the DC side of the rectifier module.

In an embodiment, the rectifier module includes a power factor correction PFC unit. The PFC unit is independently provided at a former stage to the AC/DC converter, or the PFC unit is integrated in the AC/DC converter, or the AC/DC converter is integrated in the PFC unit.

In an embodiment, the PFC unit is a hardware circuit or a software module.

In an embodiment, the DC/DC converter is an isolated DC/DC converter.

In an embodiment, the output terminals of the n DC/DC converters of the power conversion unit are connected to the multiple input terminals of the power assigning unit in any one of a one-to-one correspondence, a multiple-to-one correspondence, and a one-to-multiple correspondence.

In an embodiment, the charging unit of a charging pile further includes a centralized control unit configured to: transmit a control signal to the AC distribution unit to control switching performed by the AC distribution unit; transmit a pulse width modulation, PWM, signal to the power conversion unit to control power conversion performed by the power conversion unit; and transmit a control signal to the power assigning unit to control output power assignment performed by the power assigning unit.

In an embodiment, the charging unit of a charging pile further includes a distributed control unit. The distributed control unit includes one system controller and multiple sub-controllers. The sub-controllers are communicatively connected to the system controller.

In an embodiment, the sub-controllers are communicatively connected to the system controller via a communication bus.

In an embodiment, the charging unit includes m power conversion units, the multiple sub-controllers includes one first sub-controller, m second sub-controllers in a one-to-one correspondence with the m power conversion units, n*m third sub-controllers in a one-to-one correspondence with n*m DC/DC converters, and one fourth sub-controller, where m is a positive integer. The first sub-controller is configured to transmit a control signal to the AC distribution unit to control switching performed by the AC distribution unit. Each of the second sub-controllers is configured to transmit a PWM signal to the rectifier module of a power conversion unit corresponding to the second sub-controller, to control the rectifier module to perform power factor control and AC/DC conversion. Each of the third sub-controllers is configured to transmit a PWM signal to a DC/DC converter corresponding to the third sub-controller to control power conversion performed by the DC/DC converter. The fourth sub-controller is configured to transmit a control signal to the power assigning unit to control output power assignment performed by the power assigning unit.

According to a second aspect of the present disclosure, a charging pile is provided, including a cabinet, at least one radiator, and the charging unit according to any embodiment mentioned in the first aspect of the present disclosure. Both the charging unit and the radiator are provided inside the cabinet. A charging gun is provided outside the cabinet. The radiator is configured to dissipate heat for the charging unit. The charging unit is configured to charge an electric device.

In an embodiment, the radiator is an air-cooling radiator.

In an embodiment, the charging pile further includes a sealed casing, and the charging unit is provided inside the sealed casing.

In an embodiment 22, components in the charging unit are arranged from bottom to top, or from top to bottom, or from left to right, or from right-to-left, along a power flow direction.

In an embodiment, the power flow direction is opposite to or same as an air flow direction of the air-cooling radiator.

In an embodiment, one of the power assigning unit and the AC distribution unit is provided at an upper position in the cabinet, and the other one is provided at a lower position in the cabinet; or both of the power assigning unit and the AC distribution unit are provided at an upper position in the cabinet, or both of the power assigning unit and the AC distribution unit are provided at a lower position in the cabinet; or one of the power assigning unit and the AC distribution unit is provided at a front side of the power conversion unit and at an upper position in the cabinet, and the other one is provided at a lower position in the cabinet; or one of the power assigning unit and the AC distribution unit is provided at a front side of the power conversion unit and at a lower position in the cabinet, and the other one is provided at an upper position in the cabinet; or both of the power assigning unit and the AC distribution unit are provided at a front side of the power conversion unit, one of the power assigning unit and the AC distribution unit is provided at an upper position in the cabinet, and the other one is provided at a lower position in the cabinet.

In an embodiment, the radiator is a water-cooling radiator.

In an embodiment, in the charging unit, the power conversion unit is provided on a surface of the water-cooling radiator; and the power assigning unit and the AC distribution unit are provided on two different sides in the cabinet, or on a same side in the cabinet.

In an embodiment, the water-cooling radiator includes a housing and a cooling liquid. The power conversion unit is provided on an outside contact surface of the housing, for conducting heat of the power conversion unit. The cooling liquid is provided to flow inside the housing, to take away heat of the housing.

In an embodiment, the power conversion unit and a control unit in the charging unit are both in a sealed casing.

In an embodiment, the sealed casing is provided on a surface of the water-cooling radiator.

In an embodiment, one of the power assigning unit and the AC distribution unit is provided at an upper position in the cabinet, and the other one is provided at a lower position in the cabinet; or both of the power assigning unit and the AC distribution unit are provided at an upper position in the cabinet, or both of the power assigning unit and the AC distribution unit are provided at a lower position in the cabinet; or one of the power assigning unit and the AC distribution unit is provided at a front side of the power conversion unit and at an upper position in the cabinet, and the other one is provided at a lower position in the cabinet; or one of the power assigning unit and the AC distribution unit is provided at a front side of the power conversion unit and at a lower position in the cabinet, and the other one is provided at an upper position in the cabinet; or both of the power assigning unit and the AC distribution unit are provided at a front side of the power conversion unit, one of the power assigning unit and the AC distribution unit is provided at an upper position in the cabinet, and the other one is provided at a lower position in the cabinet.

In an embodiment, the water-cooling radiator is provided on an inner wall of a side of the cabinet.

In an embodiment, the charging pile further includes at least one charging gun provided outside the cabinet. The output terminal of the charging unit is configured to charge the electric device through the charging gun.

Based on the above technical solutions, the charging unit of a charging pile includes an AC distribution unit, a power assigning unit, and at least one power conversion unit. The power conversion unit includes one rectifier module and n DC/DC converters, where n is an integer greater than 1. An input terminal of the charging unit is connected to an AC side of the power conversion unit through the AC distribution unit. In the power conversion unit, a DC side of the rectifier module is connected to input terminals of the n DC/DC converters. Output terminals of the n DC/DC converters in the power conversion unit are configured to charge an electric device through the power assigning unit. In this way, multiple DC/DC converters are connected into the charging unit through one rectifier module, which improves integration level of the power conversion unit, improves utilization and reliability of components in the charging pile, and reduces cost, weight and volume of the charging pile.

### BRIEF DESCRIPTION OF THE DRAWINGS

In order for a clearer illustration of technical solutions in embodiments of the present disclosure or the conventional technology, drawings used in the description of the embodiments or the conventional technology are described briefly hereinafter. Apparently, the drawings described in the following illustrate only some embodiments of the present disclosure, and other drawings may be obtained by those ordinarily skilled in the art based on these drawings without any creative effort.
Figure 1 to Figure 7 are schematic diagrams of a charging unit of a charging pile according to embodiments of the present disclosure;
Figure 8 to Figure 26 are schematic diagrams of an air-cooling radiator of a charging pile according to embodiments of the present disclosure; and
Figure 27 to Figure 35 are schematic diagrams of a water-cooling radiator of a charging pile according to embodiments of the present disclosure.

### DETAILED DESCRIPTION

In order to make the objective, technical solutions and advantages of the embodiments of the present disclosure clearer, the technical solutions in the embodiments of the present disclosure are described clearly and completely in conjunction with the drawings of the embodiments of the disclosure hereinafter. It is apparent that the described embodiments are only some rather than all embodiments of the present disclosure. Any other embodiments obtained by those skilled in the art based on the embodiments in the present disclosure without any creative effort shall fall within the protection scope of the present disclosure.

In this specification, terms "comprise", "include", or any other variants thereof are intended to encompass a non-exclusive inclusion, such that the process, method, article, or device including a series of elements includes not only those elements but also those elements that are not explicitly listed, or the elements that are inherent to such process, method, article, or device. Unless expressively limited otherwise, a process, method, article or device limited by "comprising/including a(n) ..." does not exclude existence of another identical element in such process, method, article or device.

According to an embodiment, a charging unit of a charging pile is provided so as to solve the problems of high overall cost, large weight and volume, and low reliability of the charging pile caused by a parallel connection of multiple modules in the conventional technology.

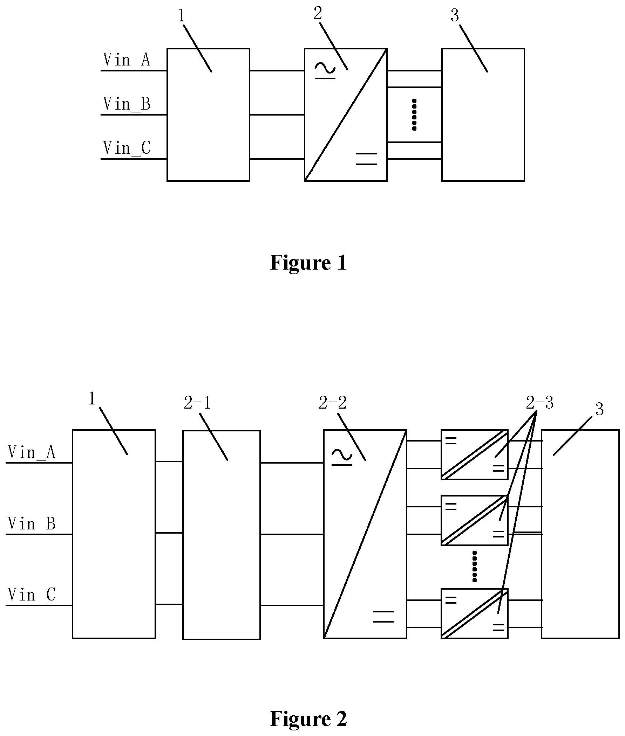

Referring to Figure 1, the charging unit of the charging pile includes an alternating current (AC) distribution unit 1, a power assigning unit 3, and at least one power conversion unit 1.

An input terminal of the AC distribution unit 1 serves as an input terminal of the charging unit of the charging pile for receiving AC power. The AC power may be three-phase AC power. In some embodiments, the input terminal of the AC distribution unit 1 has three-phase sub-terminals, namely a phase A sub-terminal, a phase B sub-terminal, and a phase C sub-terminal, which respectively serve as a phase A sub-terminal, a phase B sub-terminal and a phase C sub-terminal of the input terminal of the charging unit of the charging pile. The phase A sub-terminal of the AC distribution unit 1 is configured for receiving phase A power Vin_A in the AC power, the phase B sub-terminal of the AC distribution unit 1 is configured for receiving phase B power Vin_B in the AC power, and the phase C sub-terminal of the AC distribution unit 1 is configured for receiving phase C power Vin_C in the AC power. The AC power may be of other types, such as single-phase AC power, which depends on an actual situation and is not limited herein. The illustrated structure in this embodiment and specific description of related elements are all described with an example of three-phase AC power. Illustration and description for the cases of other types of AC power are similar to the above, and are not described in detail herein, and all shall fall within the protection scope of the present disclosure.

An output terminal of the AC distribution unit 1 is connected to an AC side of the power conversion unit 2.

In some embodiments, the output terminal of the AC distribution unit 1 has three-phase sub-terminals, namely a phase A sub-terminal, a phase B sub-terminal and a phase C sub-terminal. An AC side of a rectifier module has three-phase sub-terminals, namely phase A sub-terminal, phase B sub-terminal and phase C sub-terminal. The phase A sub-terminal of the AC distribution unit 1 is connected to the phase A sub-terminal of the AC side of the rectifier module, the phase B sub-terminal of the output terminal of the AC distribution unit 1 is connected to the phase B sub-terminal of the AC side of the rectifier module, and the phase C sub-terminal of the output terminal of the AC distribution unit 1 is connected to the phase C sub-terminal of the AC side of the rectifier module.

The power conversion unit 2 includes the rectifier module and n direct current DC/DC converters, where n is an integer greater than 1. A DC side of the rectifier module of the power conversion unit 2 is connected to input terminals of the n DC/DC converters. That is, one rectifier module may be connected to multiple DC/DC converters. In practical applications, the DC/DC converters may be isolated DC/DC converters, so as to realize isolation between a high-voltage grid side and a user side, as well as isolation between two charged users during charging, thereby improving safety of the charging pile.

Output terminals of the n DC/DC converters of the power conversion unit 2 serve as output terminals of the power conversion unit 2 and are connected to multiple input terminals of the power assigning unit 3. In practical applications, the output terminals of the n DC/DC converters of the power conversion unit and the multiple input terminals of the power assigning unit are connected in a one-to-one correspondence, a multiple-to-one correspondence, or a one-to-multiple correspondence. In some embodiments, n output terminals of the power conversion unit 2 may be connected to n input terminals of the power assigning unit 3 in a one-to-one correspondence. Alternatively, at least two output terminals of the power conversion unit 2, that is, the output terminals of at least two of the DC/DC converters, may be connected to one of the input terminals of the power assigning unit 3. That is, there may be the case that at least two output terminals of one power conversion unit 2 are connected in parallel with one of the input terminals of the power assigning unit 3, or at least one output terminal of each of at least two power conversion units 2 is connected in parallel with one of the input terminals of the power assigning unit 3. Alternatively, one of the output terminals of the power conversion unit 2 may be connected to multiple input terminals of the power assigning unit 3. A specific connection manner depends on an actual situation and is not limited herein, and all shall fall within the protection scope of the present disclosure.

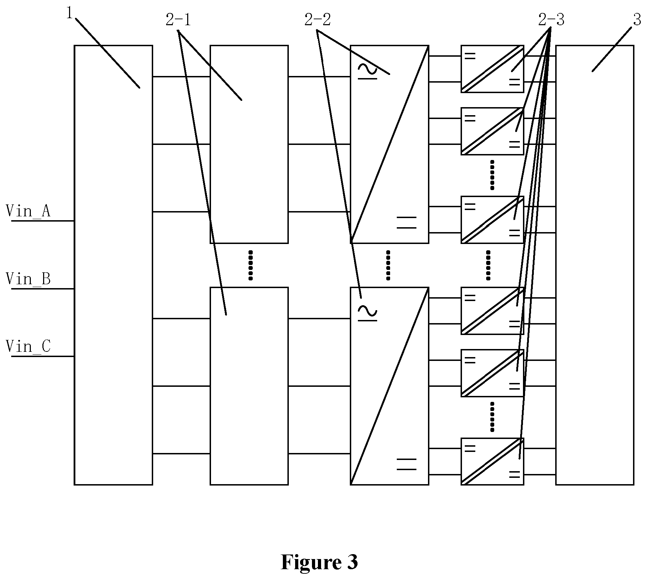

There may be one power conversion unit 2 (as shown in Figure 2), or may be multiple or two power conversion units 2(as shown in Figure 3), whose structure is not described in detail herein, and all shall fall within the protection scope of the present disclosure. It should be noted that in a case where there are m power conversion units 2 in the charging unit where m is an integer greater than zero, and each power conversion unit 2 includes n DC/DC converters, then there are n×m DC/DC converters in the charging unit.

In a case of one power conversion unit 2, the AC side of the rectifier module in the power conversion unit 2 is connected to the output terminal of the AC distribution unit 1, and the output terminals of the n DC/DC converters in the power conversion unit 2 are connected to multiple input terminals of the power assigning unit 3.

In a case of more than one power conversion units 2, the AC side of the rectifier module in each of the multiple power conversion units 2 is connected to the output terminal of the AC distribution unit 1, and the output terminals of the n DC/DC converters in each of the multiple power conversion units 2, that is, the output terminals of the total n×m DC/DC converters, are connected to multiple input terminals of the power assigning unit 3.

The output terminals of the power assigning unit 3 respectively serve as output terminals of the charging unit of the charging pile to charge electric devices. In some embodiments, each of the output terminals of the power assigning unit 3 is connected to a corresponding charging gun of the charging pile. Via the charging gun, each output terminals of the power assigning unit 3 is connected to a corresponding electric device, such as an electric vehicle, so that the power assigning unit 3 provides charging power for the electric device.

In practical applications, the power assigning unit 3 includes a multiplex switch, so that power input to the power assigning unit 3 is outputted individually or in a serial and/or parallel manner. In other words, the power assigning unit 3 may output the power inputted from its input terminals after integrating the power, or directly output the power inputted from one of its input terminal. A specific input-output relationship of the power assigning unit 3 may be that: a single input only provides power for a single output, multiple inputs all provide power for a single output, or a single input provides power for multiple outputs, which is not described in detail herein, and all shall fall within the protection scope of the present disclosure.

Different from the conventional modular stacking scheme, this embodiment breaks up and recombines the modules, that is, no longer uses each of the modules as a black box, but applies an integrated design idea to connect multiple DC/DC converters through one rectifier module, so as to reduce complexity of the system, improve integration level of the charging pile, and reduce cost, weight and volume of the charging pile. Moreover, the high integration level of the rectifier module helps to improve the reliability of the rectifier module. With the output terminal of the rectifier module being connected to multiple DC/DC converters, the assignment of the output power of the power conversion unit 2 may be finer.

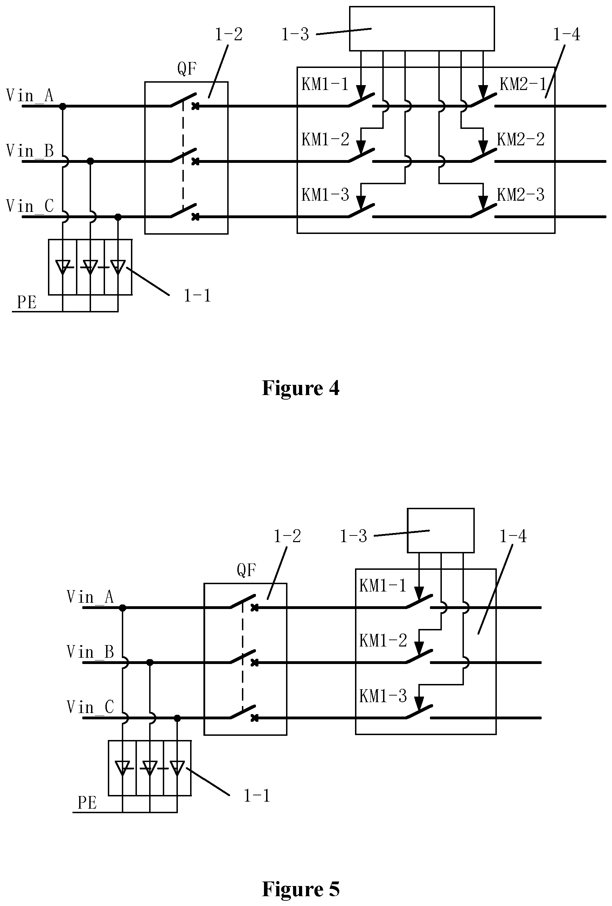

In the foregoing embodiment, the AC distribution unit 1 includes a switch unit (which includes a circuit breaker 1-2, a drive circuit 1-3, and an AC relay group 1-4 as shown in Figure 4).

Phase A input, phase B input and phase C input of AC power, that is, terminals of a three-phase AC cable for the AC power, are respectively connected to corresponding sub-terminals of an input terminal of the switch unit.

In practical applications, the AC distribution unit 1 further includes a lightning arrester 1-1, and the phase A input, the phase B input and the phase C input of the AC power, that is, the terminals of the three-phase AC cable for the AC power, are grounded via the lightning arrester 1-1.

In some embodiments, the phase A power Vin_A in the AC power is connected to a phase A sub-terminal of the lightning arrester 1-1 and the phase A sub-terminal of the switch unit, the phase B power Vin_B in the AC power is connected to phase B sub-terminal of the lightning arrester 1-1 and the phase B sub-terminal of the switch unit, and the phase C power Vin_C in the AC power is connected to phase C sub-terminal of the lightning arrester 1-1 and the phase C sub-terminal of the switch unit. A ground terminal of the lightning arrester 1-1 is grounded.

An output terminal of the switch unit serves as the output terminal of the AC distribution unit 1. In some embodiments, a phase A sub-terminal, a phase B sub-terminal and a phase C sub-terminal of the output terminal of the switch unit respectively serve as the phase A sub-terminal, phase B sub-terminal and phase C sub-terminal of the output terminal of the AC distribution unit 1.

In practical applications, the switch unit includes a drive circuit 1-3 and an AC relay group 1-4.

An input terminal of the AC relay group 1-4 is connected to the input terminal of the switch unit. In some embodiments, three-phase sub-terminals of the input terminal of the AC relay group 1-4 are connected to the three-phase terminals of the AC cables supplying the AC power in a one-to-one correspondence. An output terminal of the AC relay group 1-4 is connected to the output terminal of the switch unit. The AC relay group 1-4 is controlled by the drive circuit. The output terminal of the AC relay group 1-4 serves as the output terminal of the switch unit, that is, three-phase sub-terminals of the output terminal of the AC relay group 1-4 serve as the three-phase sub-terminals of the output terminal of the switch unit and are connected to the three-phase sub-terminals of the input terminal of the power conversion unit 2 in a one-to-one correspondence. It should be noted that the switch unit outputs three-phase alternating current to the power conversion unit 2. A control terminal of the AC relay group 1-4 is connected to the drive circuit 1-3, so that the AC relay group 1-4 is controlled by the drive circuit 1-3.

In practical applications, the switch unit further includes a circuit breaker 1-2 provided between the input terminal of the switch unit and the input terminal of the AC relay group 1-4, that is, three-phase sub-terminals of an input terminal of the circuit breaker 1-2 respectively serve as the three-phase sub-terminals of the input terminal of the switch unit, and are connected to the three-phase terminals of the AC cable for the AC power in a one-to-one correspondence. Three-phase sub-terminals of an output terminal of the circuit breaker 1-2 are connected to the three-phase sub-terminals of the input terminal of the AC relay group 1-4 in a one-to-one correspondence.

The AC relay group 1-4 includes a switch subunit provided on each cable for a phase in the AC relay group 1-4. In some embodiments, a switch subunit is provided on a cable for phase A in the AC relay group 1-4, a switch subunit is provided on a cable for phase B in the AC relay group 1-4, and a switch subunit is provided on a cable for phase C in the AC relay group 1-4.

Each switch subunit includes at least one relay.

In some embodiments, each switch subunit may include only one relay (such as KM1-1, KM1-2 or KM1-3 as shown in Figure 5). As shown in Figure 5, the drive circuit 1-3 is connected to the relay KM1-1, the relay KM1-2, and the relay KM1-3 and controls to turn on and turn off the relays.

Alternatively, each switch subunit may include multiple relays connected in series, such as two relays connected in series (like KM1-1 and KM2-1, KM1-2 and KM2-2, or KM1-3 and KM2-3 as shown in Figure 4). In this case, the relays in the switch subunit backs up each other to avoid that the switch subunit cannot be reliably turned on or turned off after one of the relays fails. As shown in Figure 4, the drive circuit 1-3 is connected to all of the relays KM1-1, KM1-2, KM1-3, KM2-1, KM2-2 and KM2-3, and controls these relays. The drive circuit 1-3 controls the two relays in each switch subunit to be turned on separately and turned off simultaneously.

In this embodiment, the AC distribution unit 1 uses relays for switching, so that the AC distribution unit 1 has a smaller volume and weight, and a reduced cost. In addition, by including multiple groups of relays in the switch subunit for switching, a switching failure caused by relay adhesion can be avoided.

In practical applications, the rectifier module includes an electromagnetic compatibility (EMC) circuit 2-1 and an AC/DC converter 2-2.

An input terminal of the EMC circuit 2-1 serves as the AC side of the rectifier module and is connected to the output terminal of the AC distribution unit 1. The EMC circuit 2-1 is configured to perform EMC filtering to prevent clutter or noise generated in the rectifier module from being transmitted to a power grid or radiated out through space. An output terminal of the EMC circuit 2-1 is connected to an AC side of the AC/DC converter 2-2. A DC side of the AC/DC converter 2-2 serves as the DC side of the rectifier module. The AC/DC converter 2-2 is configured to perform AC/DC conversion and power factor control on the supplied AC power.

In practical applications, the rectifier module further includes a power factor correction (PFC) unit. In some embodiments, the PFC unit may be independently provided at a former stage to the AC/DC converter, or integrated in the AC/DC converter. Alternatively, the AC/DC converter may be integrated in the PFC unit. The arrangement of the PFC unit depends on an actual situation and is not limited herein, and all shall fall within the protection scope of the present disclosure.

The PFC unit may be a hardware circuit or a software module, which depends on an actual situation and is not limited herein, and all shall fall within the protection scope of the present disclosure.

It should be noted that the EMC circuit 2-1 has a three-phase input and a three-phase output, and the AC/DC converter 2-2 also has a three-phase AC side, so that the charging unit can receive three-phase AC power.

In practical applications, the charging unit may adopt a centralized control or distributed control, which are described respectively as below.

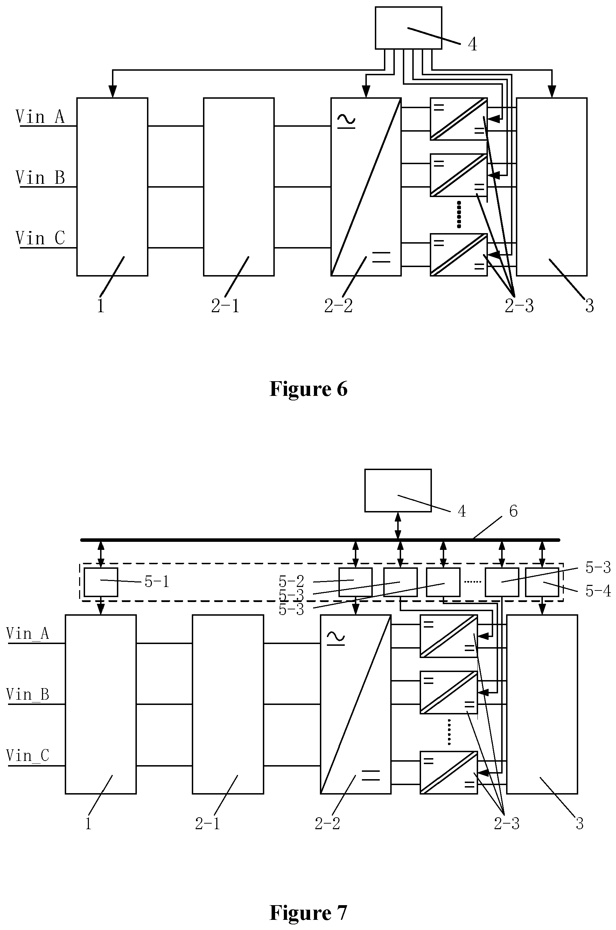

(1) As shown in Figure 6, in a case of the centralized control, the charging unit further includes a centralized control unit 4. The centralized control unit 4 directly controls operations of the AC distribution unit 1, the power conversion unit 2, and the power assigning unit 3.

In some embodiments, the centralized control unit 4 transmits to the AC distribution unit 1 a control signal for turning on/off a switching device in the AC distribution unit 1, so as to achieve switching of the AC distribution unit 1 and thereby control the power conversion unit 2 to be connected to or disconnected from supplied AC power. In some embodiments, the centralized control unit 4 transmits a control signal to the drive circuit 1-3 in the AC distribution unit 1, and the drive circuit 1-3 controls to turn on or turn off a corresponding relay in response to the control signal.

The centralized control unit 4 transmits to the power conversion unit 2 a pulse width modulation (PWM) signal to control an on-off duty ratio of the switching device in the power conversion unit 2, so that the power conversion unit 2 realizes conversion of power. In some embodiments, the centralized control unit 4 directly controls the on-off duty ratio of the switching device in the AC/DC converter 2-2; and the centralized control unit 4 directly controls the on-off duty ratio and switching frequency of the switching devices in the DC/DC converters 2-3.

The centralized control unit 4 transmits to the power assigning unit 3 a control signal for turning on and turning off the switching device in the power assigning unit 3 to realize output power assignment performed by the power assigning unit 3. In some embodiments, the centralized control unit 4 controls a corresponding switching device in the power assigning unit 3 to be turned on or off based on an actual power supply demand of an electric device, so as to output power by serial/parallel connected DC/DC converters 2-3 or by an individual DC/DC converter 2-3, thereby achieving outputs of different voltages or different power.

(2) As shown in Figure 7, in a case of the distributed control, the charging unit further includes a distributed control unit. The distributed control unit includes a system controller 4 and multiple sub-controllers (such as 5-1, 5-2, 5-3 and 5-4 shown in Figure 7).

The sub-controllers are communicatively connected to the system controller 4. In some embodiments, the sub-controllers are communicatively connected to the system controller 4 via a communication bus 6.

It should be noted that the sub-controllers may be relatively simple and low-cost controllers so as to reduce the cost for the charging pile.

In practical applications, the sub-controllers include one first sub-controller 5-1, m second sub-controllers 5-2, n*m third sub-controllers 5-3, and one fourth sub-controller 5-4, where m represents the number of the power conversion units 2 and is therefore a positive integer.

The first sub-controller 5-1 is configured to transmit the control signal to the AC distribution unit 1 to control switching performed by the AC distribution unit 1. In some embodiments, the system controller 4 transmits an on/off signal to the first sub-controller 5-1 via the communication bus, and the sub-controller controls, through the drive circuit 1-3 in the AC distribution unit 1, the AC relay group 1-4 to be turned on or turned off.

The second sub-controller 5-2 is configured to transmit a PWM signal to a corresponding rectifier module, so that the rectifier module performs power factor control and AC/DC conversion. In some embodiments, the system controller 4 transmits the PWM signal to the second sub-controller 5-2 via the communication bus, and the second sub-controller 5-2 controls the switch transistor of the rectifier module in the power conversion unit 2 to emit waves to perform the AC/DC conversion. It should be noted that the second sub-controller 5-2 may be provided in the rectifier module or independent from the rectifier module, which depends on an actual situation and is not limited herein, and all shall fall within the protection scope of the present disclosure.

Each of the third sub-controller 5-3 is configured to transmit a PWM signal to a corresponding DC/DC converter 2-3 to control power conversion performed by the DC/DC converter 2-3. In some embodiments, the system controller 4 transmits the PWM signal to the third sub-controller 5-3 via the communication bus, and the third sub-controller 5-3 controls the switch transistor in the DC/DC converter 2-3 to emit waves to perform DC/DC conversion.

The fourth sub-controller 5-4 is configured to transmit a control signal to the power assigning unit 3 to control output power assignment of the power assigning unit 3. In some embodiments, the system controller 4 controls a corresponding switching device in the power assigning unit 3 to be turned on or off based on an actual power supply demand of an electric device, so as to output power by serial/parallel connected DC/DC converters 2-3 or by an individual DC/DC converter 2-3, thereby achieving outputs of different voltages or different power.

It should be noted that the distributed control unit and the centralized control unit 4 may further communicate with a master computer through a communication interface, which is not described in detail herein, and all shall fall within the protection scope of the present disclosure.

In this embodiment, the integrated design of devices in the charging unit allows the various methods of the charging unit. The control of the charging unit is mainly achieved by the centralized control unit 4 or the system controller 4 in the distributed control unit. The control process is simple.

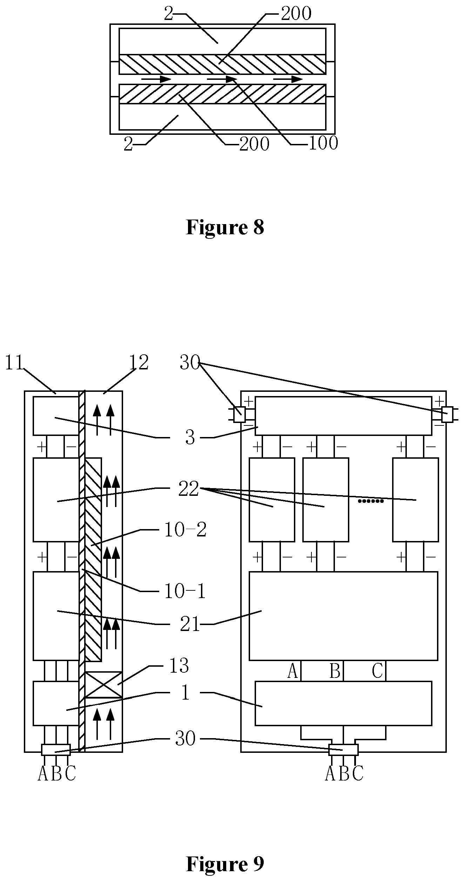

A charging pile is provided according to an embodiment of the present disclosure. Referring to Figure 8 to Figure 35, the charging pile includes a cabinet, at least one radiator 200, and the charging unit provided in any of the above embodiments. Reference may be made to the above embodiments for a specific structure and working principle of the charging unit, which is not repeated herein, and all shall fall within the protection scope of the present disclosure.

The radiator 200 is configured to dissipate heat for the charging unit.

The charging unit is configured to charge an electric device. Both the charging unit and the radiator 200 are provided inside the cabinet.

It should be noted that the charging pile may further include at least one charging gun provided outside the cabinet. The charging unit is configured to be connected to a corresponding charging gun, and the charging gun is configured to further be connected to an electric device such as an electric car, so that the charging unit can charge the electrical device through the charging gun.

In practical applications, the radiator 200 may be a water-cooling radiator or an air-cooling radiator, which are described respectively as follows.

Referring to Figure 9, the radiator may be an air-cooling radiator.

In this case, the charging pile further includes a sealed casing, and the charging unit is provided inside the sealed casing. The cabinet includes a first cabinet 11 and a second cabinet 12. The first cabinet has a higher protection level than the second cabinet. The first cabinet 11 serves as the sealed casing of the charging unit.

A radiating plate in the air-cooling radiator 200 is arranged so that a side is in the first cabinet 11, and the other side is in the second cabinet 12. The first cabinet 11 is designed to be sealed completely. In some embodiments, the radiating plate in the air-cooling radiator has a first side facing the inside of the first cabinet 11, and a second side facing the inside of the second cabinet 12. In this way, heat may be conducted between the first cabinet 11 and the second cabinet 12. Therefore, a heat dissipation function for the first cabinet 11 may be realized by dissipating heat for the second cabinet 12.

An independent air duct for heat dissipation is provided in the second cabinet 12, so that the charging unit can dissipate heat through the air duct. In some embodiments, the heat generated during operation of the charging unit is conducted through the first side of the heat dissipation plate to the second side of the heat dissipation plate, and then is taken away by the air generated by the air-cooling radiator in the air duct, thereby realizing heat dissipation.

In practical applications, the input terminal and the output terminal of the charging unit are provided as waterproof terminals 30 in the first cabinet 11.

In this embodiment, the power conversion unit in the charging unit is not provided with a heat dissipation module therein, that is, an integrated high-power conversion device is provided to replace multiple parallel-connected power conversion modules in the conventional technology. The heat dissipation is performed directly through the air-cooling radiator. In this way, it is not necessary to respectively design an air duct for heat dissipation for each power conversion module and further design an air duct for the entire charging pile as in the conventional technology, which reduces the cost for the charging pile and allows a higher protection level of the charging pile.

It should be noted that the power conversion module in the conventional technology is developed based on the technology of communication power supply, which has strict requirements on working environment, and is prone to fail in the environment of high temperature, high humidity, high salt spray or strong sand storm. In this embodiment, the charging unit is provided in the first cabinet 11 that is sealed, and the independent air duct is provided for heat dissipation of the charging unit, thereby avoiding the failure of the charging unit due to the environment of high temperature, high humidity, high salt spray or strong sand storm. In this way, a conflict between internal cooling and protection is avoided, and thereby the protection level is significantly improved compared with conventional solutions.

In practical applications, the AC distribution unit 1 and the power assigning unit 3 are located as any one of the followings.

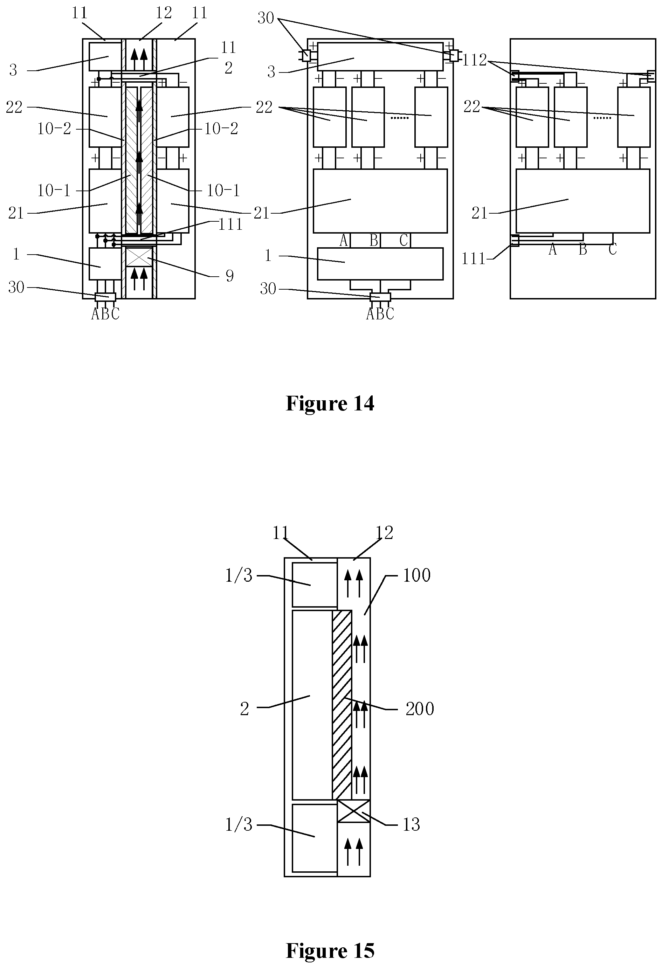

1. As shown in Figure 15, one of the power assigning unit 3 and the AC distribution unit 1 is provided at the upper position in the first cabinet 11, and the other one is provided at the lower position of the first cabinet 11. In some embodiments, the power assigning unit 3 is provided at the upper position in the first cabinet 11, and the AC distribution unit 1 is provided at the lower position in the first cabinet 11. Alternatively, the power assigning unit 3 is provided at the lower position in the first cabinet 11, and the AC distribution unit 1 is provided at the upper position in the first cabinet 11.

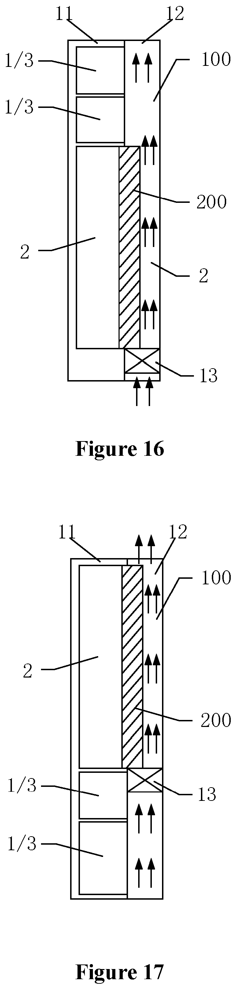

2. The power assigning unit 3 and the AC distribution unit 1 are both provided at the upper position in the first cabinet 11, as shown in Figure 16, or both at the lower position in the first cabinet 11, as shown in Figure 17.

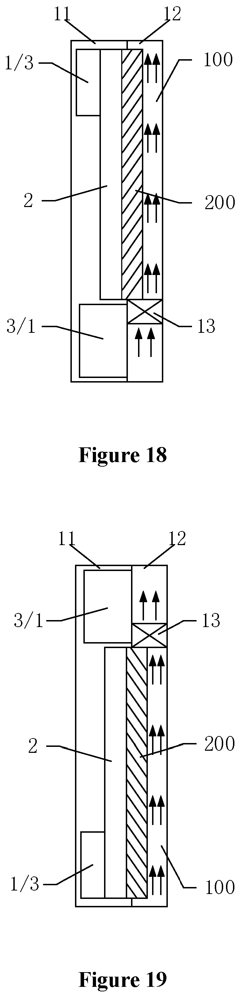

3. As shown in Figure 18, one of the power assigning unit 3 and the AC distribution unit 1 is provided at a front side of the power conversion unit 2 and at the upper position in the first cabinet 11, and the other one is provided at the lower position in the first cabinet 11. In some embodiments, the power assigning unit 3 is provided at the front side of the power conversion unit 2 and at the upper position in the first cabinet 11, and the AC distribution unit 1 is provided at the lower position in the first cabinet 11. Alternatively, the AC distribution unit 1 is provided at the front side of the power conversion unit 2 and at the upper position in the first cabinet 11, and the power assigning unit 3 is provided at the lower position in the first cabinet 11.

4. As shown in Fig. 19, one of the power assigning unit 3 and the AC distribution unit 1 is provided at the front side of the power conversion unit 2 and at the lower position in the first cabinet 11, and the other one is provided at the upper position in the first cabinet 11. In some embodiments, the power assigning unit 3 is provided at the front side of the power conversion unit 2 and at the lower position in the first cabinet 11, and the AC distribution unit 1 is provided at the upper position in the first cabinet 11. Alternatively, the AC distribution unit 1 is provided at the front side of the power conversion unit 2 and at the lower position in the first cabinet 11, and the power assigning unit 3 is provided at the upper position in the first cabinet 11.

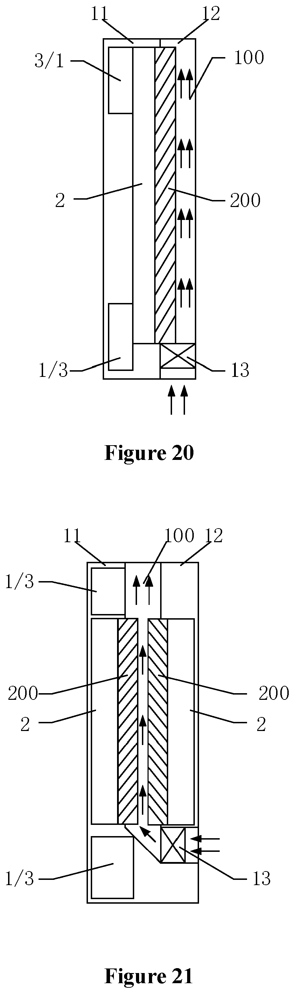

5. As shown in Figure 20, both of the power assigning unit 3 and the AC distribution unit 1 are provided at the front side of the power conversion unit 2, one of the power assigning unit 3 and the AC distribution unit 1 is provided at the upper position in the first cabinet 11, and the other one is provided at the lower position in the first cabinet 11. In some embodiments, the power assigning unit 3 is provided at the front side of the power conversion unit 2 and at the upper position in the first cabinet 11, and the AC distribution unit 1 is provided at the front side of the power conversion unit 2 and at the lower position in the first cabinet 11. Alternatively, the power assigning unit 3 is provided at the front side of the power conversion unit 2 and at the lower position in the first cabinet 11, and the AC distribution unit 1 is provided at the front side of the power conversion unit 2 and at the upper position in the first cabinet 11.

In practical applications, along a power flow direction, the following components are arranged in the following sequence: the three-phase AC cable input, the waterproof terminal 30 at the input end of the charging unit in the first cabinet 11, the AC distribution unit 1 of the charging unit, the rectifier module of the charging unit, the DC/DC converters 2-3 of the charging unit, the power assigning unit 3 of the charging unit, the waterproof terminal 30 at the output end of the charging unit in the first cabinet 11, and the charging gun.

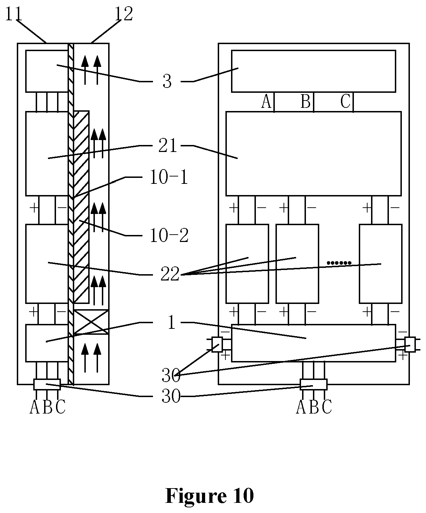

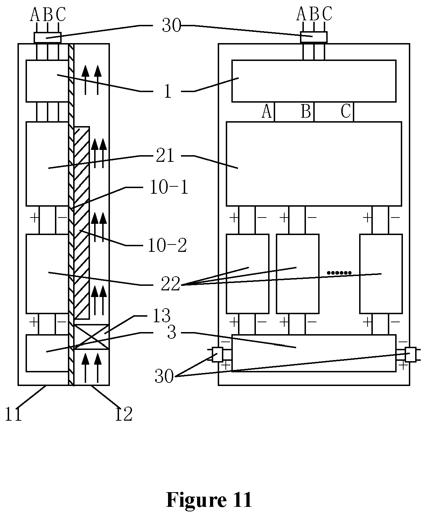

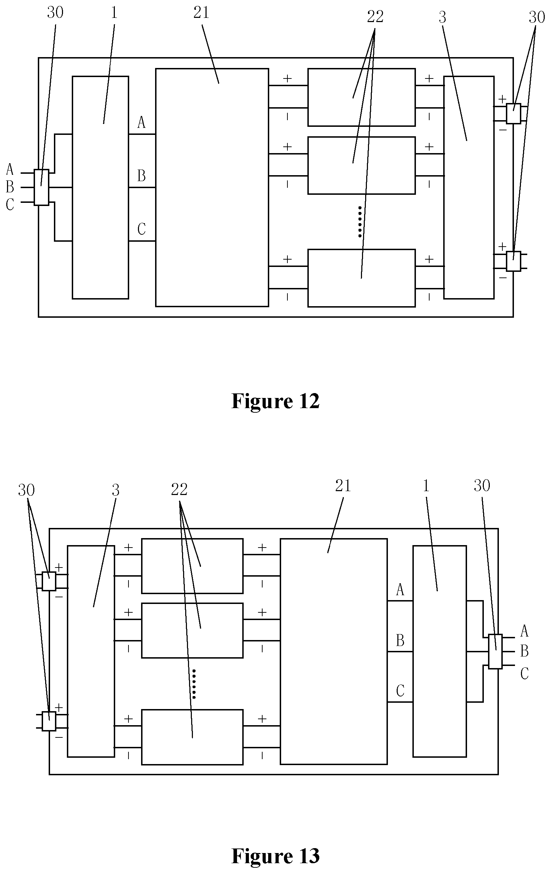

The power flow direction in the charging unit may be from bottom to top (as shown in Figure 9 and Figure 10), that is, AC power is directly fed in from a lower end of the first cabinet 11. Alternatively, the power flow direction in the charging unit may be from top to bottom (as shown in Figure 11), that is, the AC power is directly fed in from an upper end of the first cabinet 11. Alternatively, the power flow direction in the charging unit may be from left to right (as shown in Figure 12), that is, the AC power is directly fed in from a left end of the first cabinet 11. Alternatively, the power flow direction in the charging unit may be from right to left (as shown in Figure 13), that is, the AC power is directly fed in from a right end of the first cabinet 11. The power flow direction in the charging unit depends on an actual situation and is not limited herein, and all shall fall within the protection scope of the present disclosure.

In practical applications, the components in the charging unit are arranged in the power flow direction. In some embodiments, the components are arranged in the following sequence: the three-phase AC cable input, the waterproof terminal 30 at an input port of the first cabinet 11, the AC distribution unit 1 of the charging unit, the rectifier module of the charging unit, the DC/DC converters 2-3 of the charging unit, the power assigning unit 3 of the charging unit, the waterproof terminal 30 at an interface for the charging gun, and the charging gun. In other words, in a case where the power flow direction is form bottom to top, the above-mentioned components in the charging unit are also arranged from bottom to top. The same applies for any other cases of the power flow direction, which is not described in detail herein, and all shall fall within the protection scope of the present disclosure.

It should be noted that in Figure 9 to Figure 13, 21 denotes the rectifier module, and 22 denotes the DC/DC converter; and in Figure 8 and Figure 15 to Figure 24, 100 denotes the air duct for heat dissipation.

In this embodiment, the integrated design of the charging unit reduces redundant design in the conventional charging pile, so that the entire charging pile can be made smaller and lighter, with a higher power density. In addition, the components in the charging unit are properly arranged along the power flow direction, so as to have short wiring between the components and a compact structure.

In any of the above embodiments, the air-cooling radiator 200 includes: at least one heat dissipation plate and a fan 13.

The fan 13 is configured to generate an air flow in the air duct for heat dissipation.

The fan 13 has a high protection level, whose model depends on an actual situation and is not limited herein, and all shall fall within the protection scope of the present disclosure.

The heat dissipation plate includes a substrate 10-2 and a heat exchanger 10-1. The substrate 10-2 serves as a common boundary plate for the first cabinet 11 and the second cabinet 12. The heat exchanger 10-1 is arranged in the second cabinet 12, and a side of the heat exchanger 10-1 is on the substrate 10-2. The other side of the heat exchanger 10-1 is provided with heat dissipation fins to extend a thermal contact area and facilitate the air flow in the air duct taking away the heat, thereby improving heat dissipation efficiency.

The power conversion unit 2 in the charging unit is located on the substrate 10-2 or arranged into the heat exchanger 10-1. For example, a switch and a magnetic element in the power conversion unit are arranged into the heat exchanger 10-1. The heat exchanger 10-1 is located in the air duct.

In some embodiments, heat generated during operation of the charging unit is conducted through a heat dissipation surface of the radiator in the first cabinet 11 to a heat dissipation surface of the radiator in the second cabinet 12, then to the fins of the heat exchanger 10-1, and thereby being dissipated by the air flow in the air duct generated by the fan 13.

The fan 13 is provided in the second cabinet 12 at a bottom end of the heat dissipation surface or a top end of the heat dissipation surface. In other words, the fan 13 is provided at upper end or lower end of the heat exchanger 10-1.

In this embodiment, the power conversion unit 2 is in an integrated design, and the air-cooling radiator 200 is designed as having an air duct for heat dissipation. Therefore, a conflict between internal cooling and protection is avoided, and thereby the protection level is significantly improved compared with conventional solutions.

It should be noted that the power conversion unit 2 includes multiple heating-generating elements, such as a switching element and a magnetic elements. The heating elements are provided on an outer surface of the air-cooling radiator 200. In a case where the heating elements are provided on multiple outer surfaces of the air-cooling radiator, the heating elements provided on different outer surfaces are connected by cables in a sealed cable groove. The sealed cable groove includes an AC cable sealed groove 111 for receiving AC cables, and a DC cable sealed groove 112 for receiving DC cables.

In practical applications, the air duct is in a shape of polygon surrounded by the at least one heat dissipation plate. In some embodiments, the air duct may be formed by one heat dissipation plate of the air-cooling radiator and another three sides of the second cabinet 12, that is, the heat dissipation plate serves as only one side of the second cabinet 12. The air duct may be formed by two heat dissipation plates of the air-cooling radiator and another two sides of the second cabinet 12, that is, the heat dissipation plates serve as two sides of the second cabinet 12. The air duct may be formed by multiple heat dissipation plates of the air-cooling radiator, that is, each side of the second cabinet 12 is formed by the heat dissipation plates.

The air-cooling radiator 200 may be in a double-sided design, that is, there may be two contact surfaces for heat exchange. The air-cooling radiator 200 may be in a multi-sided design, that is, there may be multiple contact surfaces for heat exchange.

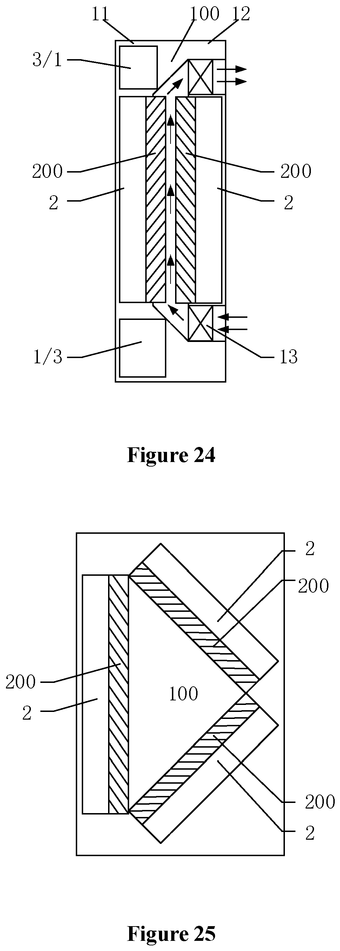

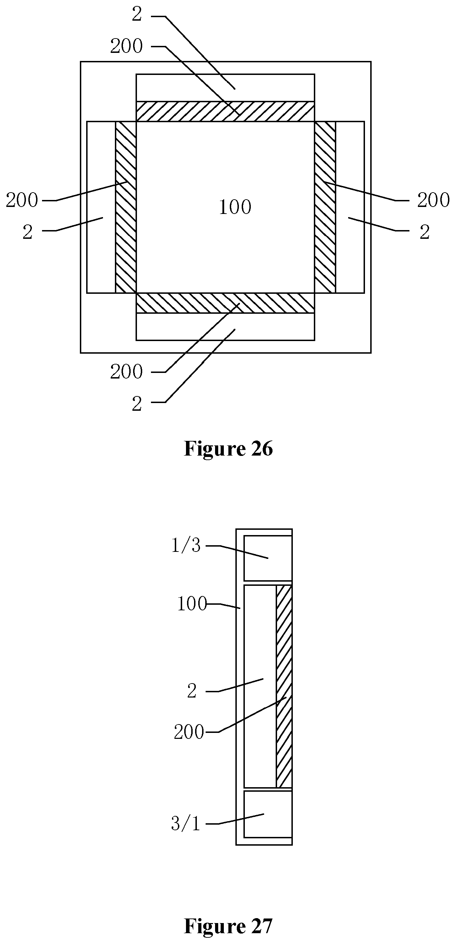

In some embodiments, when the number of air-cooling radiators 200 in the charging pile is one, the air-cooling radiator 200 is in a single-sided or double-sided design. In a case where the air-cooling radiator 200 is in the single-sided design, as shown in Figure 9 to Figure 11 and Figure 15 to Figure 20, the air-cooling radiator 200 includes one heat dissipation plate, and has one contact surface for heat exchange. The heating elements of the power conversion unit 2 are provided on the contact surface. In a case where the air-cooling radiator 200 is in the two-sided design, as shown in Figure 8, Figure 14, and Figure 21 to Figure 24, the air-cooling radiator 200 includes two heat dissipation plates arranged in parallel, and has two contact surfaces for heat exchange. The heating elements of the power conversion unit 2 are provided on only one or both of the two contact surfaces of the air-cooling radiator 200 contact surfaces. Heat of the power conversion unit 2 is conducted to the two contact surfaces, and is then taken away through the air duct within the air-cooling radiator 200. It should be noted that the heating elements, which are arranged on the contact surfaces, are all provided within a sealed casing. The first cabinet 11 includes two sub-cabinets. A part of the heating elements of the power conversion unit 2 are provided in one sub-cabinet, and the other part of the heating elements of the power conversion unit 2 are provided in the other sub-cabinet. The two sub-cabinets and the two cabinets each have a side being a heat dissipation plate. The two sub-cabinets are each sealed. The air-cooling radiator 200 may be in the multi-sided design. As shown in Figure 25, three heat dissipation plates in the air-cooling radiator 200 form a triangular prism structure. As shown in Figure 26, four heat dissipation plates in the air-cooling radiator 200 form a quadrangular prism structure. The structure of the multi-sided design is not described in detail herein, and all shall fall within the protection scope of the present disclosure.

When the number of the air-cooling radiators 200 in the charging pile is more than one, such as 2, the air-cooling radiators 200 may be designed to form a double-sided or multi-sided structure. In some embodiments, in a case of two air-cooling radiators 200, the air-cooling radiators 200 are arranged so that their heat dissipation plates are parallel and thereby form a double-sided structure. In a case of more than two air-cooling radiators 200 in the charging pile, the air-cooling radiators 200 are arranged so that their heat dissipation plates form a polygonal prism structure, such as a triangular prism structure. It should be noted that the fans in the air-cooling radiators 200 may blow in a same direction, so that there is only one direction of air flow in the air duct (as shown in Figure 24). The fans may blow air flows in different directions, which is not described in detail herein, and all shall fall within the protect scope of the present disclosure.

Assuming that the charging unit includes m power conversion units 2 each including h heating elements, the h heating elements in a same power conversion unit 2 are provided on a same contact surface. In some embodiments, all heating elements in some of the power conversion units 2 may be provided on a same contact surface, for example, the h*m heating elements are all provided on a same contact surface. Alternatively, the m power conversion units are provided on m contact surfaces in one-to-one correspondence. The specific arrangement of the power conversion units 2 depends on an actual situation and is not specifically limited herein, and all shall fall within the protection scope of the present disclosure.

A first sub-cabinet is provided with the AC distribution unit 1, the rectifier module, the DC/DC converters 2-3, and the power assigning unit 3. A second the sub-cabinet is provided with the rectifier module and the DC/DC converters 2-3. In other words, the two sub cabinets share the AC distribution unit 1 and the power assigning unit 3.

A three-phase AC input terminal of the first sub-cabinet is provided with an input of a three-phase AC distribution line through an AC cable sealed groove 111 under one side of the cabinet. A DC input terminal of the second sub-cabinet 12 is provided with DC distribution line ports through DC cable sealed grooves 112 at each of two upper sides of the sub-cabinet, and the output of the second sub-cabinet 12 is connected to the power assigning unit 3 in the first sub-cabinet.

The components in the first sub-cabinet are arranged along a power flow direction in the following sequence: the phase A input, phase B input, and phase C input of the three-phase AC power, the waterproof terminal 30 at the first sub-cabinet, the AC distribution unit 1, the rectifier module, the DC/DC converters 2-3, the power assigning unit 3, the waterproof terminal 30 at the charging gun, and the charging gun. Arrangement in the second sub-cabinet is similar to the above and is not described in detail herein, and all shall fall within the protection scope of the present disclosure.

In a case where the air-cooling radiator 200 is in the multi-sided design, the air-cooling radiator 200 includes multiple heat dissipation plates, which constitute a polygonal prism structure. The air-cooling radiator 200 has multiple contact surfaces. In some embodiments, the air-cooling radiator 200 has a triangular prism structure with three contact surfaces, or the air-cooling radiator 200 has a quadrangular prism structure with four contact surfaces. The heating elements are provided on at least one of the multiple contact surfaces of the air-cooling radiator 200. In some embodiments, the heating elements may be provided on more than one contact surfaces. In order to avoid waste of resources of the air-cooling radiator 200 or increase in cost and weight, it is preferable that the heating elements are provided on all the contact surfaces.

The second cabinet 12 is provided in a center of the cabinet, or at a position of a center axis (as shown in Figure 8). Correspondingly, the air duct is provided in the center of the entire cabinet, or at the position of the center axis.

In practical applications, the air duct is located between an air inlet 14 and an air outlet 15 in the cabinet.

An air flow direction in the air duct is one of the following: a direction from bottom to top, a direction from top to bottom, a direction from left to right, and a direction from right to left. In some embodiments, the air flow direction in the air duct may be determined based on the power flow in the charging unit. For example, the air flow in the air duct may be parallel to the power flow in the charging unit, that is, they may be the same direction or opposite directions. For example, in a case of a power flow in a direction from top to bottom, the air flow direction may be from top to bottom or from bottom to top; and in a case of a power flow in a direction from left to right, the air flow direction may be from left to right or right to left. Other cases are similar as above and are not described in detail herein. The air flow direction in the air duct may intersect with (for example, be perpendicular to) the power flow direction in the charging unit. The air flow direction in the air duct is not described in detail herein, and all shall fall within the protection scope of the present disclosure.

In a case where the air flow direction in the air duct is from bottom to top, an air inlet 14 and an air outlet 15 in the cabinet are located in one of the following manner.

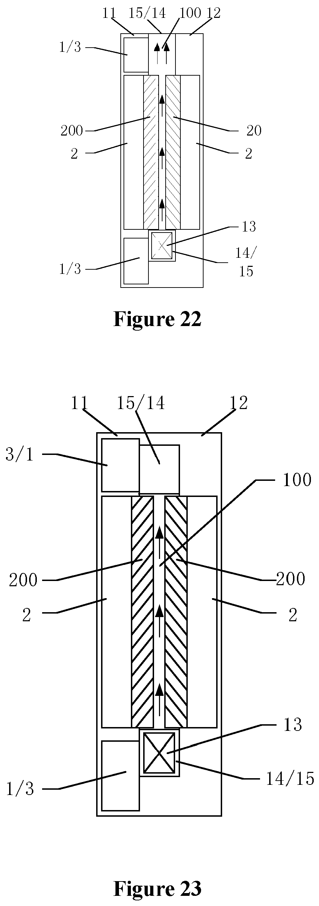

As shown in Figure 22, the air inlet 14 is provided on a lower side of the cabinet, and the air outlet 15 is provided at the upper position of the cabinet. The air inlet 14 may be provided on a back panel, and the air outlet 15 is provided at the upper position of the cabinet (not shown). As shown in Figure 23, the air inlet 14 is provided on the lower side of the cabinet, and the air outlet 15 is provided on an upper side of the cabinet. As shown in Figure 24, the air inlet 14 is provided on a lower part of a rear cover, and the air outlet 15 is located on an upper side of the rear cover.

In a case where the air flow direction in the air duct is from top to bottom, the air inlet 14 and the air outlet 15 in the cabinet are located in one of the following manner.

As shown in Figure 22, the air inlet 14 is provided at the upper position of the cabinet and the air outlet 15 is provided on the lower side of the cabinet. As shown in Figure 23, the air inlet 14 is provided on the upper side of the cabinet, and the air outlet 15 is provided on the lower side of the cabinet. As shown in Figure 24, the air inlet 14 is provided on the upper side of the rear cover, and the air outlet 15 is located on the lower part of a rear cover.

It should be noted that the structures shown in Figure 22 to Figure 24 are only examples of the double-sided design of the air-cooling radiator 200. The power assigning unit 3 and the AC distribution unit 1 in the charging unit may be arranged in various manners. For details, one may refer to the above-mentioned related embodiments, which are not repeated herein, and all shall fall within the protection scope of the present disclosure.

In this embodiment, the heating elements are provided on multiple contact surfaces, thereby increasing a contact area of the power conversion unit 2 and the air-cooling radiator 200, thereby increasing a heat dissipation speed of the power conversion unit 2.

Referring to Figure 27, the radiator may be a water-cooling radiator.

The power conversion unit 2 in the charging unit is provided on the outside contact surface of the water-cooling radiator 200; that is, the outside contact surface of the water-cooling radiator 200 is in contact with the power conversion unit 2, and heat may be conducted between the power conversion unit 2 and the water-cooling radiator 200.

The water-cooling radiator 200 is configured to dissipate heat from the charging unit by means of a flow of cooling liquid. In some embodiments, the heat of the power conversion unit 2 is conducted to the contact surface of the water-cooling radiator 200, and the condensed water in the water-cooling radiator 200 takes away the heat, thereby realizing heat dissipation for the charging unit.

In this embodiment, the power conversion unit 2 is not provided with a heat dissipation module therein. An integrated conversion device is realized by connecting multiple DC/DC converters at a rear stage to a rectifier module. In other words, the integrated high-power conversion device is provided to replace multiple parallel power conversion modules in the conventional technology. The power conversion unit 2 is provided on the outside contact surface of the water-cooling radiator 200, through which the heat is directly dissipated. In this way, it is not necessary to respectively design a heat dissipation module for each power conversion module and further design the heat dissipation for the entire charging pile as in the conventional technology, which reduces the cost for the charging pile. Since each unit does not have its own dissipation module, each unit can be sealed alone or together with other units, thereby achieving a higher protection level of the charging pile.

It should be noted that the power conversion module in the conventional technology relies on a communication power supply, which has strict requirements on working environment, and is prone to fail in the environment of high temperature, high humidity, high salt spray or strong sand storm. In this embodiment, the charging unit is provided in the first cabinet that is sealed, and the water-cooling radiator is provided for heat dissipation of the charging unit, thereby avoiding the failure of charging unit due to the environment of high temperature, high humidity, high salt spray or strong sand storm.

In any of the above embodiments, the power conversion unit 2 may be provided on a surface of the water-cooling radiator 200. The power assigning unit 3 and the AC distribution unit 1 are respectively provided on two inner sides or a same inner side of a cabinet 100.

In some embodiments, the AC distribution unit 1 and the power assigning unit 3 are located in any one of the following manners.

1. As shown in Figure 27, one of the power assigning unit 3 and the AC distribution unit 1 is provided at an upper position in the cabinet 100, and the other one is provided at a lower position in the cabinet 100. In some embodiments, the power assigning unit 3 is provided at the upper position in the cabinet 100, and the AC distribution unit 1 is provided at the lower position in the cabinet 100; or the power assigning unit 3 is provided at the lower position in the cabinet 100, and the AC distribution unit 1 is provided at the upper position in the cabinet 100.

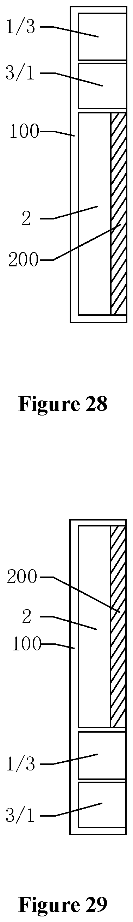

2. The power assigning unit 3 and the AC distribution unit 1 are both provided at the upper position in the cabinet 100, as shown in Figure 28, or both at the lower position in the first cabinet 100, as shown in Figure 29.

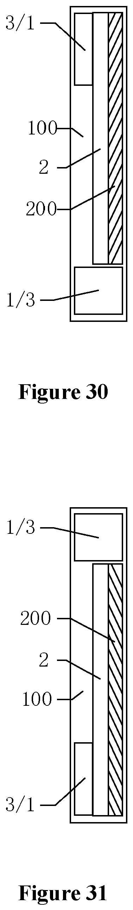

3. As shown in Figure 30, one of the power assigning unit 3 and the AC distribution unit 1 is provided at a front side of the power conversion unit 2 and at the upper position in the cabinet 100, and the other one is provided at the lower position in the cabinet 100. In some embodiments, the power assigning unit 3 is provided at the front side of the power conversion unit 2 and at the upper position in the cabinet 100, and the AC distribution unit 1 is provided at the lower position in the cabinet 100. Alternatively, the AC distribution unit 1 is provided at the front side of the power conversion unit 2 and at the upper position in the cabinet 100, and the power assigning unit 3 is provided at the lower position in the cabinet 100.

4. As shown in Figure 31, one of the power assigning unit 3 and the AC distribution unit 1 is provided at the front side of the power conversion unit 2 and at the lower position in the cabinet 100, and the other one is provided at the upper position in the cabinet 100. In some embodiments, the power assigning unit 3 is provided at the front side of the power conversion unit 2 and at the lower position in the cabinet 100, and the AC distribution unit 1 is provided at the upper position in the cabinet 100. Alternatively, the AC distribution unit 1 is provided at the front side of the power conversion unit 2 and at the lower position in the cabinet 100, and the power assigning unit 3 is provided at the upper position in the cabinet 100.

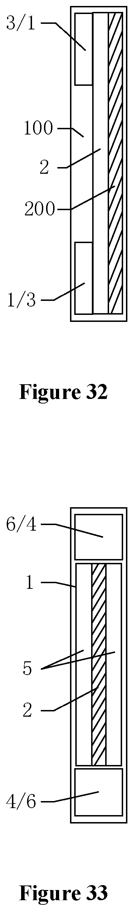

5. As shown in Figure 32, the power assigning unit 3 and the AC distribution unit 1 are both provided at the front side of the power conversion unit 2, one of the power assigning unit 3 and the AC distribution unit 1 is provided at the upper position in the cabinet 100, and the other one is provided at the lower position in the cabinet 100. In some embodiments, the power assigning unit 3 is provided at the front side of the power conversion unit 2 and at the upper position in the cabinet 100, and the AC distribution unit 1 is provided at the front side of the power conversion unit 2 and at the lower position in the cabinet 100. Alternatively, the power assigning unit 3 is provided at the front side of the power conversion unit 2 and at the lower position in the cabinet 100, and the AC distribution unit 1 is provided at the front side of the power conversion unit 2 and at the upper position in the cabinet 100.

In this embodiment, the integrated design of the charging unit reduces redundant design in the conventional charging pile, so that the entire charging pile can be made smaller and lighter with a higher power density.

In any of the above embodiments, the water-cooling radiator 200 includes a housing and a cooling liquid.

The power conversion unit 2 is provided on an outside contact surface of the housing so that the heat of the power conversion unit 2 is conducted. The cooling liquid is provided inside the housing, so that the heat of the housing is taken away by a flow of the cooling liquid. In some embodiments, the heat of the power conversion unit 2 is first conducted to the outer side of the casing, and then to the inner side of the casing. Then the cooling liquid in the casing takes away the heat on the inner side the casing. Since the heat is conductive, the heat of the power conversion unit 2 is also taken away.

In this embodiment, the power conversion unit 2 is in an integrated design, and the water-cooling radiator 200 is designed to realize liquid cooling. Therefore, a conflict between internal cooling and protection is avoided, and thereby the protection level is significantly improved compared with conventional solutions. Moreover, since liquid cooling has a better heat dissipation effect, the power level may be further improved.

It should be noted that the power conversion unit 2 includes multiple heating elements provided on one or more outside contact surfaces of the water-cooling radiator 200.

The water-cooling radiator 200 may be in a double-sided design, that is, two contact surfaces for heat exchange are designed. The water-cooling radiator 200 may be in a multi-sided design, that is, multiple contact surfaces for heat exchange are designed.

In some embodiments, in a case where the water-cooling radiator 200 is in the double-sided design, as shown in Figure 33, the water-cooling radiator 200 is plate-shaped, and has two contact surfaces. The heating elements are provided on only one of the two contact surfaces of the water-cooling radiator 200 (as shown in Figure 27 to Figure 32), or on both of the contact surfaces of the water-cooling radiator 200 (as shown in Figure 33). The heat of the power conversion unit 2 is conducted through the two contact surfaces, and is then taken away by the cooling liquid in the water-cooling radiator 200.

In a case where at least one contact surface of the water-cooling radiator 200 is not provided with any heating element, such contact surface is against the back plate of the cabinet 100 (as shown in Figure 27 to Figure 32). In a case where the two contact surfaces of the water-cooling radiator 200 are both provided with the heating elements, the water-cooling radiator 200 is provided at a center of the cabinet 100, or, at a position of a central axis (as shown in Figure 33).

It should be noted that the structure shown in Figure 33 is only an example of the double-sided design of the water-cooling radiator 200. The power assigning unit 3 and the AC distribution unit 1 in the charging unit may be arranged in various manners. For details, one may refer to the above-mentioned related embodiments, which are not repeated herein, and all shall fall within the protection scope of the present disclosure.

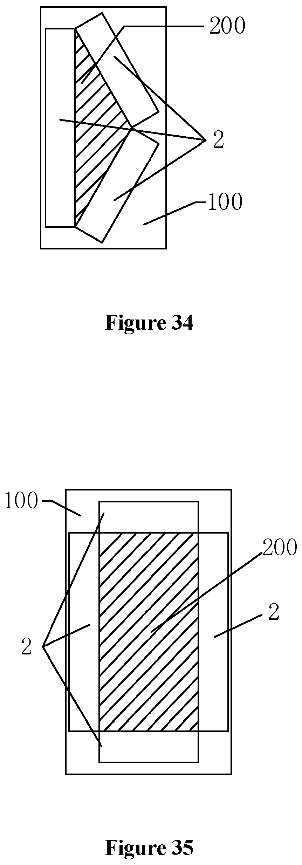

When the water-cooling radiator 200 is in the multi-sided design, as shown in Figure 34 and Figure 35, the water-cooling radiator 200 has a polygonal prism structure with multiple contact surfaces. In some embodiments, the water-cooling radiator 200 has a triangular prism structure with three contact surfaces, as shown in Figure 34, or the water-cooling radiator 200 has a quadrangular prism structure with four contact surfaces, as shown in Figure 35. The heating elements are provided on at least one of the multiple contact surfaces of the water-cooling radiator 200.In some embodiments, the heating elements may be provided on more than one contact surfaces. In order to avoid waste of resources of the water-cooling radiator 200 or increase in cost and weight, it is preferable that the heating elements are provided on all the contact surfaces.

In a case where at least one contact surface of the water-cooling radiator 200 is not provided with any heating element, such contact surface is against the back plate of the cabinet 100 (as shown in Figure 27 to Figure 32). In a case where the two contact surfaces of the water-cooling radiator 200 are both provided with the heating elements, the water-cooling radiator 200 is provided at a center of the cabinet 100, or, at a position of a central axis (as shown in Figure 33).

Assuming that the charging unit includes m power conversion units 2 each including h heating elements, the h*m heating elements are provided on corresponding contact surfaces. In some embodiments, all heating elements in the same power conversion unit 2 may be provided on a same contact surface, or all heating elements in all the power conversion unit 2 may be provided on a same contact surface, that is, the h*m heating elements may be all provided on the same contact surface. Alternatively, the m power conversion units are provided on m contact surfaces in a one-to-one correspondence. The specific arrangement of the power conversion units 2 depends on an actual situation and is not limited herein, and all shall fall within the protection scope of the present disclosure.

In this embodiment, the heating elements are provided on multiple contact surfaces, thereby increasing a contact area between the power conversion unit 2 and the water-cooling radiator 200, which in turn increases a heat dissipation speed of the power conversion unit 2.

The features cited in embodiments of the present disclosure may be replaced or combined with each other, the same or similar parts among the embodiments may be referred to each other, and each embodiment places emphasis on the difference from another embodiment. Since the system disclosed in the embodiments is basically similar to the method therein, the description thereof is relatively simple, and reference may be made to the description of the method for relevant matters. The above-described system and the embodiments of the system are only schematic. A unit described as a discrete component may or may not be physically separated. Components shown as units may or may not be physical units, that is, the components may be located in one place or may be distributed onto multiple network units. Some or all modules thereof may be selected based on an actual requirement, to implement an objective of the solution in the embodiments. Those skilled in the art may understand and implement the present disclosure without any creative effort.

It may be further understood by those skilled in the art that units and algorithm steps described in combination with the disclosed embodiments may be implemented by electronic hardware, computer software or a combination thereof. In order to clearly describe interchangeability of the hardware and the software, the units and the steps are generally described above in view of their functions. Whether the functions being implemented by the hardware or by the software depends on applications of the technical solution and design constraint conditions. Those skilled in the art may use different methods for each particular application to implement the described functions, but such implementation should not be considered as going beyond the scope of the present disclosure.

The description of the embodiments herein enables those skilled in the art to implement or use the present disclosure.

## Claims

1. A charging pile, comprising:
a cabinet;
at least one radiator (200); and
a charging unit, comprising an alternating current, AC, distribution unit (1), a power assigning unit (3) and at least one power conversion unit (2), wherein
both the charging unit and the radiator are provided inside the cabinet;
the radiator (200) is configured to dissipate heat for the charging unit;
the charging unit is configured to charge an electric device;
the power conversion unit (2) comprises one rectifier module and n direct current DC/DC converters, where n is an integer greater than 1;
an input terminal of the AC distribution unit (1) serves as an input terminal of the charging unit for receiving AC power;
an output terminal of the AC distribution unit (1) is connected to an AC side of the power conversion unit (2);
a DC side of the rectifier module of the power conversion unit (2) is connected to input terminals of the n DC/DC converters;
output terminals of the n DC/DC converters of the power conversion unit (2) are connected to a plurality of input terminals of the power assigning unit (3); and
each output terminal of the power assigning unit (3) serves as an output terminal of the charging unit for charging an electric device,
**characterized in that** the cabinet includes a first cabinet (11) and a second cabinet (12), the first (11) cabinet has a higher protection level than the second cabinet (12), the first cabinet (12) is a sealed casing, and the charging unit is provided inside the sealed casting ,
wherein the at least one radiator (200) is an air-cooling radiator comprising a radiating plate, one side of the radiating plate is in the first cabinet (11), and the other side of the radiating plate is in the second cabinet (12), and an independent air duct for heat dissipation is provided in the second cabinet (12).

2. The charging pile according to claim 1, wherein
the AC distribution unit (1) comprises a switch unit;
a phase A input of the AC power is connected to a phase A sub-terminal of an input terminal of the switch unit, a phase B input of the AC power is connected to a phase B sub-terminal of the input terminal of the switch unit, a phase C input of the AC power is connected to a phase C sub-terminal of the input terminal of the switch unit; and
an output terminal of the switch unit serves as the output terminal of the AC distribution unit (1).

3. The charging pile according to claim 2, wherein the switch unit comprises a drive circuit (1-3) and an AC relay group (1-4), wherein
an input terminal of the AC relay group (1-4) is connected to the input terminal of the switch unit;
an output terminal of the AC relay group (1-4) is connected to the output terminal of the switch unit; and
the AC relay group (1-4) is controlled by the drive circuit (1-3).

4. The charging pile according to claim 3, wherein the AC relay group (1-4) comprises a switch subunit provided on each cable for a phase in the AC relay group (1-4).

5. The charging pile according to claim 2, wherein the AC distribution unit (1) further comprises a lightning arrester (1-1), and
the phase A input, the phase B input, and the phase C input of the AC power are grounded through the lightning arrester (1-1).

6. The charging pile according to claim 1, wherein the rectifier module comprises an electromagnetic compatibility, EMC, circuit and an AC/DC converter, wherein
an input terminal of the EMC circuit serves as an AC side of the rectifier module;
an output terminal of the EMC circuit is connected to an AC side of the AC/DC converter; and
a DC side of the AC/DC converter serves as the DC side of the rectifier module.

7. The charging pile according to claim 1, wherein the rectifier module further comprises a power factor correction, PFC, unit, wherein
the PFC unit is provided at a former stage to the AC/DC converter, or
the PFC unit is integrated in the AC/DC converter, or
the AC/DC converter is integrated in the PFC unit.

8. The charging pile according to claim 1, wherein the DC/DC converter is an isolated DC/DC converter.

9. The charging pile according to claim 1, wherein the output terminals of the n DC/DC converters of the power conversion unit (2) are connected to the plurality of input terminals of the power assigning unit (3) in a one-to-one correspondence, or a multiple-to-one correspondence, or a one-to-multiple correspondence.

10. The charging pile according to any one of claims 1 to 9, further comprising a centralized control unit (4) configured to:
transmit a control signal to the AC distribution unit (1) to control switching performed by the AC distribution unit (1);
transmit a pulse width modulation, PWM, signal to the power conversion unit (2) to control power conversion performed by the power conversion unit (2); and
transmit a control signal to the power assigning unit (3) to control output power assignment performed by the power assigning unit (3).

11. The charging pile according to any one of claims 1 to 9, further comprising a distributed control unit, wherein
the distributed control unit comprises one system controller and a plurality of sub-controllers; and
the plurality of sub-controllers are communicatively connected to the system controller.

12. The charging pile according to claim 11, wherein the plurality of sub-controllers are communicatively connected to the system controller via a communication bus.

13. The charging pile according to claim 11, wherein the charging unit comprises m power conversion units (2), the plurality of sub-controllers comprise one first sub-controller, m second sub-controllers in a one-to-one correspondence with the m power conversion units (2), n*m third sub-controllers in a one-to-one correspondence with n*m DC/DC converters, and one fourth sub-controller, where m is a positive integer;
the first sub-controller is configured to transmit a control signal to the AC distribution unit (1) to control switching performed by the AC distribution unit (1);
each of the second sub-controllers is configured to transmit a PWM signal to the rectifier module of a power conversion unit (2) corresponding to the second sub-controller, to control the rectifier module to perform power factor control and AC/DC conversion;
each of the third sub-controllers is configured to transmit a PWM signal to a DC/DC converter corresponding to the third sub-controller to control power conversion performed by the DC/DC converter; and
the fourth sub-controller is configured to transmit a control signal to the power assigning unit (3) to control output power assignment performed by the power assigning unit (3).

## Patentansprüche

1. Ladesäule, umfassend:
ein Gehäuse;
mindestens einen Kühler (200); und
eine Ladeeinheit, umfassend eine Wechselstrom-, AC, -Verteilungseinheit (1), eine Leistungszuweisungseinheit (3) und mindestens eine Leistungsumwandlungseinheit (2), wobei
sowohl die Ladeeinheit als auch der Kühler innerhalb des Gehäuses angeordnet sind;
der Kühler (200) ausgebildet ist, Wärme für die Ladeeinheit abzuführen;
die Ladeeinheit ausgebildet ist, eine elektrische Vorrichtung zu laden;
die Leistungsumwandlungseinheit (2) ein Gleichrichtermodul und n Gleichstrom-DC/DC-Wandler umfasst, wobei n eine ganze Zahl größer als 1 ist;
ein Eingangsanschluss der AC-Verteilungseinheit (1) als ein Eingangsanschluss der Ladeeinheit zum Empfangen von AC-Leistung dient;
ein Ausgangsanschluss der AC-Verteilungseinheit (1) mit einer AC-Seite der Leistungsumwandlungseinheit (2) verbunden ist;
eine DC-Seite des Gleichrichtermoduls der Leistungsumwandlungseinheit (2) mit Eingangsanschlüssen der n DC/DC-Wandler verbunden ist;
Ausgangsanschlüsse der n DC/DC-Wandler der Leistungsumwandlungseinheit (2) mit einer Vielzahl von Eingangsanschlüssen der Leistungszuweisungseinheit (3) verbunden sind; und
jeder Ausgangsanschluss der Leistungszuweisungseinheit (3) als ein Ausgangsanschluss der Ladeeinheit zum Laden einer elektrischen Vorrichtung dient,
**dadurch gekennzeichnet, dass**
das Gehäuse ein erstes Gehäuse (11) und ein zweites Gehäuse (12) einschließt, das erste (11) Gehäuse eine höhere Schutzart als das zweite Gehäuse (12) aufweist, das erste Gehäuse (12) ein abgedichtetes Gehäuse ist und die Ladeeinheit innerhalb des abgedichteten Gehäuses angeordnet ist,
wobei der mindestens eine Kühler (200) ein Luftkühler ist, der eine Wärmeableitplatte umfasst, eine Seite der Wärmeableitplatte sich in dem ersten Gehäuse (11) befindet, und die andere Seite der Wärmeableitplatte sich in dem zweiten Gehäuse (12) befindet, und ein unabhängiger Luftkanal zur Wärmeabfuhr in dem zweiten Gehäuse (12) angeordnet ist.

2. Ladesäule nach Anspruch 1, wobei
die AC-Verteilungseinheit (1) eine Schaltereinheit umfasst;
ein Phasen-A-Eingang der AC-Leistung mit einem Phasen-A-Subanschluss eines Eingangsanschlusses der Schaltereinheit verbunden ist, ein Phasen-B-Eingang der AC-Leistung mit einem Phasen-B-Subanschluss des Eingangsanschlusses der Schaltereinheit verbunden ist, ein Phasen-C-Eingang der AC-Leistung mit einem Phasen-C-Subanschluss des Eingangsanschlusses der Schaltereinheit verbunden ist; und
ein Ausgangsanschluss der Schaltereinheit als der Ausgangsanschluss der AC-Verteilungseinheit (1) dient.

3. Ladesäule nach Anspruch 2, wobei die Schaltereinheit eine Ansteuerschaltung (1-3) und eine AC-Relaisgruppe (1-4) umfasst, wobei
ein Eingangsanschluss der AC-Relaisgruppe (1-4) mit dem Eingangsanschluss der Schaltereinheit verbunden ist;
ein Ausgangsanschluss der AC-Relaisgruppe (1-4) mit dem Ausgangsanschluss der Schaltereinheit verbunden ist; und
die AC-Relaisgruppe (1-4) durch die Ansteuerschaltung (1-3) gesteuert wird.

4. Ladesäule nach Anspruch 3, wobei die AC-Relaisgruppe (1-4) eine Schalter-Subeinheit umfasst, die auf jedem Kabel für eine Phase in der AC-Relaisgruppe (1-4) angeordnet ist.

5. Ladesäule nach Anspruch 2, wobei die AC-Verteilungseinheit (1) weiter einen Überspannungsableiter (1-1) umfasst, und
der Phasen-A-Eingang, der Phasen-B-Eingang und der Phasen-C-Eingang der AC-Leistung über den Überspannungsableiter (1-1) geerdet sind.

6. Ladesäule nach Anspruch 1, wobei das Gleichrichtermodul eine Elektromagnetische-Verträglichkeit-, EMV, -Schaltung und einen AC/DC-Wandler umfasst, wobei
ein Eingangsanschluss der EMV-Schaltung als eine AC-Seite des Gleichrichtermoduls dient;
ein Ausgangsanschluss der EMV-Schaltung mit einer AC-Seite des AC/DC-Wandlers verbunden ist; und
eine DC-Seite des AC/DC-Wandlers als die DC-Seite des Gleichrichtermoduls dient.

7. Ladesäule nach Anspruch 1, wobei das Gleichrichtermodul weiter eine Leistungsfaktorkorrektur-, PFC, -Einheit umfasst, wobei
die PFC-Einheit in einer vorgeschalteten Stufe zu dem AC/DC-Wandler angeordnet ist, oder
die PFC-Einheit in den AC/DC-Wandler integriert ist, oder
der AC/DC-Wandler in die PFC-Einheit integriert ist.

8. Ladesäule nach Anspruch 1, wobei der DC/DC-Wandler ein isolierter DC/DC-Wandler ist.

9. Ladesäule nach Anspruch 1, wobei die Ausgangsanschlüsse der n DC/DC-Wandler der Leistungsumwandlungseinheit (2) mit der Vielzahl von Eingangsanschlüssen der Leistungszuweisungseinheit (3) in einer Eins-zu-eins-Entsprechung oder einer Mehrfachzu-eins-Entsprechung oder einer Eins-zu-mehreren-Entsprechung verbunden sind.

10. Ladesäule nach einem der Ansprüche 1 bis 9, weiter umfassend eine zentrale Steuereinheit (4), die ausgebildet ist, um:
ein Steuersignal an die AC-Verteilungseinheit (1) zu übertragen, um ein durch die AC-Verteilungseinheit (1) durchgeführtes Schalten zu steuern;
ein Pulsweitenmodulations-, PWM, -Signal an die Leistungsumwandlungseinheit (2) zu übertragen, um eine durch die Leistungsumwandlungseinheit (2) durchgeführte Leistungsumwandlung zu steuern; und
ein Steuersignal an die Leistungszuweisungseinheit (3) zu übertragen, um eine durch die Leistungszuweisungseinheit (3) durchgeführte Ausgangsleistungszuweisung zu steuern.

11. Ladesäule nach einem der Ansprüche 1 bis 9, weiter umfassend eine verteilte Steuereinheit, wobei
die verteilte Steuereinheit einen Systemcontroller und eine Vielzahl von Subcontrollern umfasst; und
die Vielzahl von Subcontrollern kommunikativ mit dem Systemcontroller verbunden ist.

12. Ladesäule nach Anspruch 11, wobei die Vielzahl von Subcontrollern über einen Kommunikationsbus kommunikativ mit dem Systemcontroller verbunden ist.

13. Ladesäule nach Anspruch 11, wobei die Ladeeinheit m Leistungsumwandlungseinheiten (2) umfasst, die Vielzahl von Subcontrollern einen ersten Subcontroller, m zweite Subcontroller in einer Eins-zu-eins-Entsprechung mit den m Leistungsumwandlungseinheiten (2), n*m dritte Subcontroller in einer Eins-zu-eins-Entsprechung mit n*m DC/DC-Wandlern und einen vierten Subcontroller umfasst, wobei m eine positive ganze Zahl ist;
der erste Subcontroller ausgebildet ist, ein Steuersignal an die AC-Verteilungseinheit (1) zu übertragen, um ein durch die AC-Verteilungseinheit (1) durchgeführtes Schalten zu steuern;
jeder der zweiten Subcontroller ausgebildet ist, ein PWM-Signal an das Gleichrichtermodul einer dem zweiten Subcontroller entsprechenden Leistungsumwandlungseinheit (2) zu übertragen, um das Gleichrichtermodul zu steuern, eine Leistungsfaktorregelung und eine AC/DC-Umwandlung durchzuführen;
jeder der dritten Subcontroller ausgebildet ist, ein PWM-Signal an einen dem dritten Subcontroller entsprechenden DC/DC-Wandler zu übertragen, um eine durch den DC/DC-Wandler durchgeführte Leistungsumwandlung zu steuern; und
der vierte Subcontroller ausgebildet ist, ein Steuersignal an die Leistungszuweisungseinheit (3) zu übertragen, um eine durch die Leistungszuweisungseinheit (3) durchgeführte Ausgangsleistungszuweisung zu steuern.

## Revendications

1. Pile de charge, comprenant :
une armoire ;
au moins un radiateur (200) ; et
une unité de charge, comprenant une unité (1) de distribution de courant alternatif, CA, une unité (3) d'affectation de puissance et au moins une unité (2) de conversion de puissance, dans laquelle
l'unité de charge et le radiateur sont, l'un comme l'autre, situés à l'intérieur de l'armoire ;
le radiateur (200) est configuré pour dissiper de la chaleur pour l'unité de charge ;
l'unité de charge est configurée pour charger un dispositif électrique ;
l'unité (2) de conversion de puissance comprend un module redresseur et n convertisseurs CC/CC de courant continu, n étant un nombre entier supérieur à 1 ;
une borne d'entrée de l'unité (1) de distribution de CA sert de borne d'entrée de l'unité de charge pour recevoir une alimentation en CA ;
une borne de sortie de l'unité (1) de distribution de CA est reliée à un côté CA de l'unité (2) de conversion de puissance ;
un côté CC du module redresseur de l'unité (2) de conversion de puissance est relié à des bornes d'entrée des n convertisseurs CC/CC ;
des bornes de sortie des n convertisseurs CC/CC de l'unité (2) de conversion de puissance sont reliées à une pluralité de bornes d'entrée de l'unité (3) d'affectation de puissance ; et
chaque borne de sortie de l'unité (3) d'affectation de puissance sert de borne de sortie de l'unité de charge pour charger un dispositif électrique,
**caractérisée en ce que** l'armoire inclut une première armoire (11) et une deuxième armoire (12), la première armoire (11) présente un degré de protection supérieur à celui de la deuxième armoire (12), la première armoire (12) est un boîtier étanche, et l'unité de charge est disposée à l'intérieur du boîtier étanche,
dans laquelle au moins un radiateur (200) est un radiateur à refroidissement par air comprenant une plaque de dissipation thermique, un côté de la plaque de dissipation thermique étant situé dans la première armoire (11), et l'autre côté de la plaque de dissipation thermique étant situé dans la deuxième armoire (12), et un conduit d'air indépendant de dissipation thermique étant prévu dans la deuxième armoire (12).

2. Pile de charge selon la revendication 1, dans laquelle
l'unité (1) de distribution de CA comprend une unité de commutation ;
une entrée de phase A de l'alimentation en CA est reliée à une sous-borne de phase A d'une borne d'entrée de l'unité de commutation, une entrée de phase B de l'alimentation en CA est reliée à une sous-borne de phase B de la borne d'entrée de l'unité de commutation, une entrée de phase C de l'alimentation en CA est reliée à une sous-borne de phase C de la borne d'entrée de l'unité de commutation ; et
une borne de sortie de l'unité de commutation sert de borne de sortie de l'unité (1) de distribution de CA.

3. Pile de charge selon la revendication 2, dans laquelle l'unité de commutation comprend un circuit d'attaque (1-3) et un groupe de relais CA (1-4), dans laquelle
une borne d'entrée du groupe de relais CA (1-4) est reliée à la borne d'entrée de l'unité de commutation ;
une borne de sortie du groupe de relais CA (1-4) est reliée à la borne de sortie de l'unité de commutation ; et
le groupe de relais CA (1-4) est commandé par le circuit d'attaque (1-3).

4. Pile de charge selon la revendication 3, dans laquelle le groupe de relais CA (1-4) comprend une sous-unité de commutation disposée sur chaque câble pour une phase dans le groupe de relais CA (1-4).

5. Pile de charge selon la revendication 2, dans laquelle l'unité (1) de distribution de CA comprend en outre un parafoudre (1-1), et
l'entrée de phase A, l'entrée de phase B, et l'entrée de phase C de l'alimentation en CA sont reliées à la terre à travers le parafoudre (1-1).

6. Pile de charge selon la revendication 1, dans laquelle le module redresseur comprend un circuit de compatibilité électromagnétique, CEM, et un convertisseur CA/CC, dans laquelle
une borne d'entrée du circuit CEM sert de côté CA du module redresseur ;
une borne de sortie du circuit CEM est reliée à un côté CA du convertisseur CA/CC ; et
un côté CC du convertisseur CA/CC sert de côté CC du module redresseur.

7. Pile de charge selon la revendication 1, dans laquelle le module redresseur comprend en outre une unité de correction du facteur de puissance, PFC, dans laquelle
l'unité PFC est prévue à un étage antérieur au convertisseur CA/CC, ou
l'unité PFC est intégrée dans le convertisseur CA/CC, ou
le convertisseur CA/CC est intégré dans l'unité PFC.

8. Pile de charge selon la revendication 1, dans laquelle le convertisseur CC/CC est un convertisseur CC/CC isolé.

9. Pile de charge selon la revendication 1, dans laquelle les bornes de sortie des n convertisseurs CC/CC de l'unité (2) de conversion de puissance sont reliées à la pluralité de bornes d'entrée de l'unité (3) d'affectation de puissance dans une correspondance un à un, ou une correspondance multiple à un, ou une correspondance un à multiple.

10. Pile de charge selon l'une quelconque des revendications 1 à 9, comprenant en outre une unité de commande centralisée (4) configurée pour :
transmettre un signal de commande à l'unité (1) de distribution de CA pour commander une commutation effectuée par l'unité (1) de distribution de CA ;
transmettre un signal de modulation de largeur d'impulsion, PWM, à l'unité (2) de conversion de puissance pour commander une conversion de puissance effectuée par l'unité (2) de conversion de puissance ; et
transmettre un signal de commande à l'unité (3) d'affectation de puissance pour commander une affectation de puissance de sortie effectuée par l'unité (3) d'affectation de puissance.

11. Pile de charge selon l'une quelconque des revendications 1 à 9, comprenant en outre une unité de commande distribuée, dans laquelle
l'unité de commande distribuée comprend un dispositif de commande système et une pluralité de sous-dispositifs de commande ; et
la pluralité de sous-dispositifs de commande est reliée de manière communicante au dispositif de commande système.

12. Pile de charge selon la revendication 11, dans laquelle la pluralité de sous-dispositifs de commande est reliée de manière communicante au dispositif de commande système via un bus de communication.

13. Pile de charge selon la revendication 11, dans laquelle l'unité de charge comprend m unités de conversion de puissance (2), la pluralité de sous-dispositifs de commande comprend un premier sous-dispositif de commande, m deuxièmes sous-dispositifs de commande dans une correspondance un à un avec les m unités de conversion de puissance (2), n*m troisièmes sous-dispositifs de commande dans une correspondance un à un avec n*m convertisseurs CC/CC, et un quatrième sous-dispositif de commande, m étant un nombre entier positif ;
le premier sous-dispositif de commande est configuré pour transmettre un signal de commande à l'unité (1) de distribution de CA pour commander une commutation effectuée par l'unité (1) de distribution de CA ;
chacun des deuxièmes sous-dispositifs de commande est configuré pour transmettre un signal PWM au module redresseur d'une unité (2) de conversion de puissance correspondant au deuxième sous-dispositif de commande, pour commander le module redresseur afin d'effectuer une correction du facteur de puissance et une conversion CA/CC ;
chacun des troisièmes sous-dispositifs de commande est configuré pour transmettre un signal PWM à un convertisseur CC/CC correspondant au troisième sous-dispositif de commande pour commander une conversion de puissance effectuée par le convertisseur CC/CC ; et
le quatrième sous-dispositif de commande est configuré pour transmettre un signal de commande à l'unité (3) d'affectation de puissance pour commander une affectation de puissance de sortie effectuée par l'unité (3) d'affectation de puissance.
